(19) Europäisches Patentamt
European Patent Office
Office européen des brevets

(11) **EP 2 344 401 B1**

(12) **EUROPÄISCHE PATENTSCHRIFT**

(45) Veröffentlichungstag und Bekanntmachung des Hinweises auf die Patenterteilung:
**24.10.2018 Patentblatt 2018/43**

(21) Anmeldenummer: **09753028.1**

(22) Anmeldetag: **03.11.2009**

(51) Int Cl.:
*B65D 75/36* (2006.01)   *B32B 27/08* (2006.01)
*B32B 27/30* (2006.01)   *B32B 27/32* (2006.01)

(86) Internationale Anmeldenummer:
**PCT/EP2009/007844**

(87) Internationale Veröffentlichungsnummer:
**WO 2010/051960 (14.05.2010 Gazette 2010/19)**

(54) **MEHRSCHICHTFOLIE**

MULTI-LAYER FILM

FEUILLE MULTICOUCHE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **06.11.2008 DE 102008056123**

(43) Veröffentlichungstag der Anmeldung:
**20.07.2011 Patentblatt 2011/29**

(73) Patentinhaber: **Klöckner Pentaplast GmbH 56412 Heiligenroth (DE)**

(72) Erfinder:
• **MÜNSTER, Jochen**
**CH-4564 Zielebach (CH)**
• **ALLEMANN, Beat**
**CH-3007 Bern (CH)**
• **ECKERT, Alain**
**CH-3007 Bern (CH)**

(74) Vertreter: **Plate, Jürgen et al
Plate Schweitzer Zounek
Patentanwälte
Rheingaustrasse 196
65203 Wiesbaden (DE)**

(56) Entgegenhaltungen:
EP-A- 2 033 775        WO-A-2008/014862
WO-A-2008/033404   DE-T2- 60 209 812
JP-A- H01 110 953     US-A1- 2003 203 141
US-A1- 2005 139 505  US-A1- 2007 284 280

**Beschreibung**

Die vorliegende Erfindung betrifft eine Mehrschichtfolie mit geringer Wasserdampf- und Sauerstoffdurchlässigkeit, die sich insbesondere für Blisterverpackungen für Medikamente eignet.

Die Barrierewirkung von polymeren Materialien und Folien gegenüber Wasserdampf ist in der Regel unabhängig von der Barrierewirkung gegenüber Sauerstoff. Dementsprechend haben Materialien mit guter Wasserdampfbarriere nicht unbedingt auch eine gute Sauerstoff- und Aromabarriere und umgekehrt. Lediglich Polyvinylidenchlorid (PVDC) weist sowohl gegenüber Sauerstoff wie auch gegenüber Wasserdampf eine Barrierewirkung in einem mittleren bis guten Wertebereich auf. PCTFE, Polyolefine und andere Polymere haben eine gute bis sehr gute Wasserdampfbarriere, aber eine sehr niedrige Sauerstoffbarriere. EVOH (EthylenVinylalkohol-Copolymer) hat eine sehr gute Sauerstoffbarriere, aber eine niedrige Wasserdampfbarriere. Eine marktfähige, d.h. wirtschaftlich herstellbare polymere Verpackungsfolie, die eine hohe Wasserdampfbarriere bei zugleich hoher Sauerstoffbarriere aufweist, ist z.Z. nicht verfügbar. Andererseits erweisen sich moderne Medikamente in zunehmendem Maße als empfindlich gegenüber Wasserdampf und Sauerstoff. Dementsprechend werden an die Barrierewirkung von Verpackungsfolien für Medikamente ständig wachsende Anforderungen gestellt. Während bisher eine hohe Barrierewirkung vor allem gegenüber Wasserdampf benötigt wurde, müssen Verpackungsfolien für moderne Medikamente nun auch eine hohe Barrierewirkung gegenüber Sauerstoff aufweisen.

Tiefziehbare Kunststofffolien werden in großem Maßstab für die Verpackung von Waren, Lebensmitteln und Medikamenten eingesetzt. Eine wichtige Rolle kommt hierbei den sogenannten Blisterverpackungen zu. Blisterverpackungen weisen eine auf das Produkt abgestimmte Form auf, die durch Tiefziehen einer flachen, vorzugsweise transparenten Kunststofffolie erhalten wird. Der zu dem jeweiligen Produkt bzw. Packgut konforme Teil der Verpackung wird auch als Bodenteil bezeichnet und nach Befüllen mit dem Packgut durch Verschweißen oder Versiegeln mit einer Deckfolie, vorzugsweise einer Aluminiumfolie, verschlossen. Je nach Anwendungszweck muss eine Verpackung bestimmte Anforderungen hinsichtlich ihrer Barrierewirkung gegenüber Wasserdampf, Sauerstoff und ggf. weiteren Gasen, wie Kohlendioxid erfüllen. Beispielsweise wird für eine Vielzahl von Medikamenten eine Verpackung mit einer Wasserdampfdurchlässigkeit von weniger als 0,06 g/(m$^2$·24h) und vereinzelt von weniger als 0,04 g/(m$^2$·24h) gefordert. Bei transparenten Folien ist eine Wasserdampfdurchlässigkeit von weniger als 0,06 g/(m$^2$·24h) lediglich durch die Verwendung von PCTFE als Folienmaterial mit einer Dicke von größer 100 μm erzielbar. Eine Wasserdampfdurchlässigkeit unterhalb von 0,04 g/(m$^2$·24h) war bisher nur mittels Aluminiumfolie, insbesondere mittels der sogenannten "Cold Form Foil" realisierbar. Derartige Aluminiumfolien sind nicht transparent und weisen zudem eine geringe Verformbarkeit auf, so dass kleinere Blister hieraus nicht herstellbar sind und somit eine wesentlich grössere Folienfläche benötigt wird als beim Thermoformblister.

Neben hoher Barrierewirkung müssen tiefziehbare Kunststofffolien weitere Eigenschaften wie Siegelbarkeit, Schlierenfreiheit, geringe Dicke, gleichmäßiges Dickenprofil und gute Verarbeitbarkeit aufweisen. Für die Verarbeitbarkeit sind vor allem eine gute Verformbarkeit, also eine möglichst gleichmäßige Dickenverteilung des verformten Teils sowie eine vollständige Ausformung, geringe thermische Verwerfung (das sogenannte Curling) und ein kleiner Reibungskoeffizient, d.h. eine gute Gleitfähigkeit gegenüber den in Kontakt kommenden Maschinenteilen und den Packgütern von Vorteil. Curling tritt bei zwei- oder mehrschichtigen Verbundfolien auf, wenn sich die Temperaturausdehnungskoeffizienten (CTE) der einzelnen Schichtmaterialien unterscheiden.

Thermoformbare Kunststofffolien für Verpackungen mit Barrierewirkung gegenüber Wasserdampf sind im Stand der Technik bekannt.

EP 1 655 237 A1 offenbart eine thermo- oder kaltgeformte Blisterverpackung mit einem Blisterbodenteil und einer Deckfolie. Die Deckfolie besteht aus einer 10 bis 30 μm dicken Aluminiumfolie, die auf einer ersten Seite eine von der Aluminiumfolie peelbare Folie aus wenigstens einer Kunststoffschicht auf der Basis von thermo- oder duroplastischen Polymeren und auf der zweiten, gegen das Blisterbodenteil gesiegelten Seite mit einer Kunststofffolie auf der Basis von Polyvinylchlorid (PVC) mit einer Foliendicke von 10 bis 40 μm, oder Polyvinylidenchlorid (PVDC) mit einer Foliendicke von 10 bis 40 μm, oder Polypropylen (PP) mit einer Foliendicke von 6 bis 35 μm, oder Polyethylen (PE) mit einer Foliendicke von 6 bis 35 μm, oder Polyester mit einer Foliendicke von 5 bis 10 μm, oder Polychlortrifluorethylen (PCTFE) mit einer Foliendicke von 8 bis 30 μm, oder Cycloolefin-Copolymeren (COC) oder Cycloolefin-Polymeren (COP) mit einer Dicke von 10 bis 40 μm, beschichtet oder kaschiert ist. Das Blisterbodenteil besteht wenigstens auf der gegen die Deckfolie gesiegelten Seite aus einem Material, dessen chemische Struktur mit derjenigen der gegen das Blisterbodenteil gesiegelten Kunststofffolie kompatibel ist. Die von der Aluminiumfolie peelbare Folie besteht aus einer oder mehreren Schichten aus einem oder mehreren der Kunststoffe PVC, PVDC, PCTFE, PP, PE, Polyester, Polyethylennaphthalat (PEN), Polyamid (PA), COC, COP, Polystyrol (PS) oder Zellglas.

EP 1 468 817 A1 betrifft eine Deckfolie für Blisterverpackungen mit thermo- oder kaltgeformten Blisterbodenteilen. Die Deckfolie umfasst eine 5 bis 30 μm dicke Aluminiumfolie, die auf einer zur Siegelung gegen ein Blisterbodenteil vorgesehenen Seite mit einer Kunststofffolie auf der Basis von PVC mit einer Foliendicke von 10 bis 40 μm, oder PVDC mit einer Foliendicke von 10 bis 40 μm, oder PP mit einer Foliendicke von 6 bis 35 μm, oder Polyester mit einer Foliendicke von 5 bis 15 μm, oder PCTFE mit einer Foliendicke von 8 bis 76 μm, oder COC mit einer Dicke von 10 bis 40 μm

kaschiert ist. Blisterbodenteile bestehen beispielsweise aus Folien aus PVC, PP, PET, PE und aus Verbundfolien wie PVC/ACLAR® (PCTFE), PVC/PVDC und COC oder Al-Al Blister.

DE 602 09 812 T2 beschreibt eine mindestens einschichtige Polymerfolie, wobei die eine Schicht eine Vinylidenchloridzusammensetzung umfasst, die 100 Gewichtsteile Vinylidenchloridcopolymer; zwischen 0,1 und 10 Gewichtsteile Stabilisator, zwischen 0,1 und 10 Gewichtsteile Schmiermittel, und zwischen 0,1 und 10 Gewichtsteile hydrophilen Ton umfasst. Die Polymerfolie hat beispielsweise eine Struktur vom Typ C/A/B, B/A/D/B oder C/A/D/C wobei A für PVDC steht.

WO 2008/014862 A1 betrifft eine Packung, umfassend ein wiederverschließbares Behältnis und einen Blister, wobei mindestens eine Innenwandung der Packung mit einem Absorptionsmittel ausgestattet ist. Der Blister umfasst eine Einfach- oder eine Verbundfolie, die aus einer Kombination mehrerer Polymere wie PVC/PVDC, PVC/HDPE, PVC/PCTFE, PP/COC oder PVC/COC/PVDC besteht. Insbesondere wird der Blister aus einfachen und preiswerten Kunststofffolien mit geringer Dicke hergestellt, die eine hohe Durchlässigkeit für Wasserdampf aufweisen. Bevorzugt werden 15 bis 50 $\mu$m dicke PVC-, PP- und PET-Folien mit einer Wasserdampfdurchlässigkeit von umgerechnet 17,5 bis 58,3 g/(m$^2$·24h), 4,2 bis 14 g/(m$^2$·24h) bzw. 27 bis 90 g/(m$^2$·24h) eingesetzt. Derartige Folien sind preiswert und lassen sich gut auf herkömmlichen Tiefzieh-Anlagen verarbeiten.

WO 2008/033404 A2; US 2007/0284280 A1 und US 2005/0139505 A1 offenbaren Blisterpackungen umfassend eine Blisterkomponente mit einer ersten Barriere und ein Bodenteil mit einer zweiten Barriere, wobei die erste Barriere aus einer einfachen oder beschichteten Polymerfolie, aus einem Metallfilm oder aus einem Film-Folien-Laminat besteht. Für die erste und zweite Barriere werden Materialien bzw. Verbundmaterialien wie PVC, PVC/PVDC, PVC/PCTFE, COC, PVC/Aluminium/Nylon, Aluminium, PP, PET und PETG vorgeschlagen. Die erste und zweite Barriere weisen eine Wasserdampfdurchlässigkeit von kleiner 6 g/(m$^2$·24h) und eine Sauerstoffdurchlässigkeit von kleiner 28 cm$^3$/(m$^2$·24h) auf.

Die im Stand der Technik bekannten Folien für Verpackungen weisen eine unzureichende Barrierewirkung gegenüber Wasserdampf und Sauerstoff auf oder erfordern den Einsatz erheblicher Mengen an PCTFE, einer Aluminiumfolie oder anorganischer Additive. Diese Maßnahmen sind im Fall von PCTFE mit erhöhten Kosten verbunden oder beeinträchtigen die Verarbeitbarkeit und sonstige Eigenschaften wie optische Transparenz.

PCTFE-Folie weist eine sehr gute Wasserdampfbarriere auf, hat aber eine niedrige Sauerstoffbarriere. Durch Erhöhung der Dicke einer PCTFE-Folie kann die Wasserdampfbarriere grundsätzlich gesteigert werden, wegen der indirekten Proportionalität zwischen Materialdicke und Wasserdampfdurchlässigkeit steigt die notwendig PCTFE-Dicke schnell in einen technisch und wirtschaftlich sehr ungünstigen Bereich und eine für anspruchsvolle Verpackungsanwendungen ausreichende Sauerstoffbarriere ist jedoch nicht erzielbar. PVDC andererseits hat zwar eine sehr gute Sauerstoffbarriere, jedoch eine wesentlich geringere Wasserdampfbarriere als PCTFE. Um mit PVDC die gleiche Wasserdampfbarriere wie mit PCTFE zu erreichen, muss die Dicke von PVDC 165 % der Dicke von PCTFE betragen. PVDC-Folien bzw. Schichten werden üblicherweise durch Auftragen von vielen dünnen Lagen hergestellt. Um beispielsweise eine Wasserdampfbarriere von 0.035 g/(m$^2$·24h) (gemessen bei einer Temperatur von 38 °C und einer relativen Luftfeuchtigkeit von 90%) zu erzielen, wäre ein Flächengewicht von etwa 400 g/m$^2$ PVDC erforderlich. Hierfür werden auf einer konventionellen industriellen Beschichtungsanlage 40 Maschinendurchgänge mit einem Auftrag von je 10 g/m$^2$ oder 27 Durchgänge zu 15 g/m$^2$ benötigt. Eine derartig hohe Zahl von Maschinendurchgängen ist weder aus technischen noch wirtschaftlichen Gründen realisierbar. Mit den im Stand der Technik bekannten industriellen Verfahren werden PVDC-Schichten bis zu einem Flächengewicht von maximal 180 g/m$^2$ hergestellt.

Die Sauerstoffbarriere von PVDC wird nur geringfügig durch den Einfluss von Feuchtigkeit beeinflusst, während z.B. EVOH, welches ebenfalls eine sehr gute Sauerstoffbarriere besitzt, stark unter dem Einfluss von Feuchtigkeit an Sauerstoffbarriere verliert. Der Verlust bei EVOH geht im Extremfall über Zehnerpotenzen. EVOH wird üblicherweise in Lebensmittelverpackungen, neuerdings aber auch in Pharmaverpackungen benutzt.

Die vorliegende Erfindung hat die Aufgabe, eine Folie bereitzustellen, die eine hohe Barrierewirkung gegenüber Wasserdampf in Kombination mit einer Barrierewirkung gegen Sauerstoff bei zugleich effizientem Materialeinsatz und guter Verarbeitbarkeit bietet und Designanforderungen, z.B. hinsichtlich optischer Transparenz, erfüllt. Insbesondere soll eine Folie geschaffen werden, die sich für die Herstellung von Bodenteilen für Blisterverpackungen eignet.

Erfindungsgemäß wird die voranstehende Aufgabe durch eine Mehrschichtfolie mit den Merkmalen des Patentanspruchs 1 gelöst. Danach beinhaltet die in Rede stehende Mehrschichtfolie mindestens vier Schichten, umfassend

- eine erste Schicht und eine vierte Schicht mit einer Dicke von 10 bis 400 $\mu$m aus einem Polymer ausgewählt aus der Gruppe umfassend Polyvinylchlorid, Copolymere aus Vinylchlorid-Einheiten und einem oder mehreren anderen Monomeren (VC-Copolymere), Gemische aus Polyvinylchlorid und VC-Copolymeren, Polyester, Polyolefine, Polyacrylnitril (PAN), Copolymere aus Acrylnitril-Einheiten und einem oder mehreren anderen Monomeren (AN-Copolymere);

- eine zweite Schicht mit einer Dicke von 9 bis 120 $\mu$m aus einem Vinylidenchlorid-Polymer ausgewählt aus der Gruppe umfassend Polyvinylidenchlorid, Copolymere aus Vinylidenchlorid-Einheiten und einem oder mehreren anderen Monomeren (VDC-Copolymere), Gemische aus Polyvinylidenchlorid und VDC-Copolymeren; und

- eine dritte Schicht mit einer Dicke von 15 bis 210 $\mu$m aus einem Chlortrifluorethylen-Polymer ausgewählt aus der Gruppe umfassend Polychlortrifluorethylen, Copolymere aus Chlortrifluorethylen-Einheiten und einem oder mehreren anderen Monomeren (CTFE-Copolymere), Gemische aus Polychlortrifluorethylen und CTFE-Copolymeren.

Für die erste und vierte Schicht werden als Polyester bevorzugt Polyethylenterephthalat (PET), insbesondere amorphes PET (APET) und Copolymere aus Ethylenterephthalat-Einheiten und einem oder mehreren anderen Monomeren verwendet. Ein besonders bevorzugtes Copolymer ist PETG, welches aus Ethylenterephthalat- und Cyclohexandimethanol-Einheiten aufgebaut ist.

Als Polyolefin für die erste und vierte Schicht sind vor allem Polypropylen (PP), Polyethylen (PE), Cycloolefin-Copolymere (COC) und Cycloolefinpolymere (COP) bevorzugt.

Im Sinne der Erfindung werden für die Polymere der ersten, zweiten und dritten Schicht die Abkürzungen PVC, PVDC und PCTFE verwendet, wobei

- PVC ein Vinylchlorid-Polymer ausgewählt aus der Gruppe umfassend Polyvinylchlorid, Copolymere aus Vinylchlorid- bzw. Chlorethen-Einheiten und einem oder mehreren anderen Monomeren (VC-Copolymere), Gemische aus Polyvinylchlorid und VC-Copolymeren;

- PVDC ein Vinylidenchlorid-Polymer ausgewählt aus der Gruppe umfassend Polyvinylidenchlorid, Copolymere aus Vinylidenchlorid- bzw. 1,1-Dichlorethen-Einheiten und einem oder mehreren anderen Monomeren (VDC-Copolymere), Gemische aus Polyvinylidenchlorid und VDC-Copolymeren; und

- PCTFE ein Chlortrifluorethylen-Polymer ausgewählt aus der Gruppe umfassend Polychlortrifluorethylen, Copolymere aus Chlortrifluorethylen-Einheiten und einem oder mehreren anderen Monomeren (CTFE-Copolymere), Gemische aus Polychlortrifluorethylen und CTFE-Copolymeren bezeichnet.

Die Reihenfolge der Schichten im Schichtaufbau ist variierbar. Die Schichten können kombiniert werden, so dass Schichtaufbauten aus PVC/PVDC/PCTFE/PVC, PVC/PCTFE/PVC/PVDC, PVC/PVDC/PVC/PCTFE, sowie äquivalente Schichtaufbauten, bei denen die erste und vierte Schicht anstelle von PVC ein Polyester, Polyolefin, Polyacrylnitril (PAN) oder AN-Copolymer beinhalten, erhalten werden.

Insbesondere hat die erfindungsgemäße Mehrschichtfolie die Materialzusammensetzung PVC/PVDC/PCTFE/PVC.

Desweiteren umfasst die Mehrschichtfolie eine oder mehrere Kleberschichten und eine oder mehrere Primerschichten, wobei die einzelne Kleberschicht und/oder die einzelne Primerschicht zwischen je zwei der Schichten angeordnet sind.

Die Erfindung wird im Folgenden anhand von Figuren näher erläutert; es zeigen:

Fig. 1    eine nicht erfindungsgemäße Mehrschichtfolie mit drei Schichten; und

Fig. 2    eine Mehrschichtfolie mit vier Schichten.

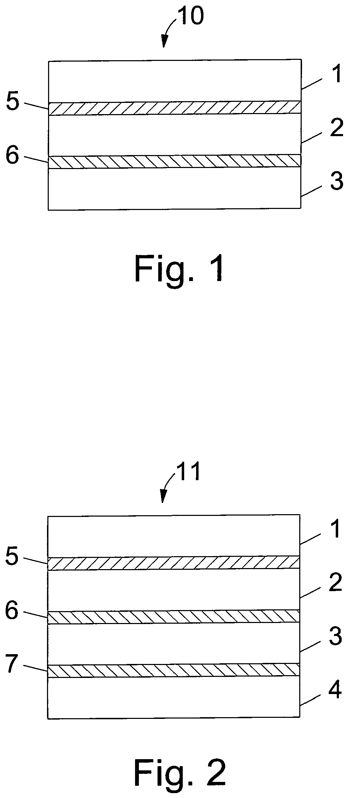

In Fig. 1 ist ein Beispiel einer nicht erfindungsgemäßen Mehrschichtfolie 10 mit drei Schichten 1, 2 und 3 gezeigt, wobei die Schicht 1 zu größer/gleich 85 Gew.-%, bezogen auf das Gesamtgewicht der Schicht 1, aus PVC; die Schicht 2 zu größer/gleich 95 Gew.-%, bezogen auf das Gesamtgewicht der Schicht 2, aus PVDC; und die Schicht 3 zu größer/gleich 95 Gew.-%, bezogen auf das Gesamtgewicht der Schicht 3, aus PCTFE besteht.

Die Mehrschichtfolie 10 umfasst eine oder mehrere Primerschichten 5 und/oder eine oder mehrere Kleberschichten 6, die zwischen je zwei der Schichten 1, 2 und 3 angeordnet sind.

Fig. 2 zeigt eine erfindungsgemäße Mehrschichtfolie 11, die eine Schicht 4 umfasst, die zu größer/gleich 85 Gew.-%, bezogen auf das Gesamtgewicht der Schicht 4, aus PVC besteht. Die Bezugszeichen 1, 2 und 3 der Fig. 2 haben die gleiche Bedeutung wie in Fig. 1. Zudem sind in Fig. 2 eine Primerschicht 5 und zwei Kleberschichten 6 und 7 dargestellt.

Ob eine Primerschicht 5 und/oder eine Kleberschicht 6, 7 verwendet wird, hängt von dem jeweiligen Verfahren ab, nach dem die Mehrschichtfolie 11 hergestellt wird. Primer werden zur Haftvermittlung von PVDC-Dispersionsbeschichtungen und Trockenkaschierklebstoffe zur Verklebung von zwei Folienbahnen eingesetzt. Wird die Mehrschichtfolie 11 z.B. mittels Coextrusion der Schichten 1, 2, 3 und 4 erzeugt, entfallen Primer- und Kleberschichten. Bei der Herstellung mittels Coextrusion werden häufig sogenannte Tie-Layer für die Verbindung der Einzelschichten verwendet.

Die Schichten 1, 2, 3, 4 der erfindungsgemäßen Mehrschichtfolien 11 können auch in einer anderen Reihenfolge angeordnet sein, beispielsweise in einer der folgenden Konfigurationen:

$$1/3/4/2 \quad (= PVC/PCTFE/PVC/PVDC); \text{ oder}$$

$$1/2/4/3 \quad (= PVC/PVDC/PVC/PCTFE).$$

Neben den Schichten 1, 2, 3 und 4 kann die Mehrschichtfolie 11 weitere Schichten aus polymeren Materialien, Aluminium oder Papier umfassen.

Vorzugsweise umfasst jede der Schichten 1 und 4 bis zu 15 Gew.-% und jede der Schichten 2 und 3 bis zu 5 Gew.-% an Additiven, bezogen auf das Gesamtgewicht der jeweiligen Schicht.

Die Schichten 1, 4 weisen eine Dicke von 10 bis 400 $\mu$m; die Schicht 2 eine Dicke von 9 bis 120 $\mu$m; und die Schicht 3 eine Dicke von 15 bis 210 $\mu$m auf.

Die Dicke der Schicht 2 beträgt insbesondere 70 bis 110 $\mu$m und ihr Flächengewicht liegt im Bereich von 120 bis 180 g/m$^2$.

Der Kehrwert der Wasserdampfdurchlässigkeit der Mehrschichtfolie 11 ist um mindestens 5 % größer als die Summe der Kehrwerte der Wasserdampfdurchlässigkeiten der einzelnen Schichten gemäß der Beziehung

$$\frac{1}{WDD_M} \geq 1{,}05 \sum_{j=1}^{N} \frac{1}{WDD_j} \quad ,$$

wobei $WDD_M$ die Wasserdampfdurchlässigkeit der Mehrschichtfolie, $WDD_j$ die Wasserdampfdurchlässigkeit der j-ten Schicht und N eine natürliche Zahl größer/gleich 3 ist und N die Anzahl der Schichten in der Mehrschichtfolie angibt.

Bevorzugt ist der Kehrwert der Wasserdampfdurchlässigkeit der Mehrschichtfolie 11 um mindestens 10 %, vorzugsweise um mindestens 15 %, und insbesondere um mindestens 20 % größer als die Summe der Kehrwerte der Wasserdampfdurchlässigkeiten der einzelnen Schichten.

Die Mehrschichtfolie 11 weist bei einer Temperatur von 38 °C und einer relativen Luftfeuchtigkeit von 90 % eine Wasserdampfdurchlässigkeit von 0,027 bis 0,034 g/(m$^2\cdot$24h), vorzugsweise von 0,027 bis 0,031 g/(m$^2\cdot$24h) auf. Im Rahmen der Erfindung wird die Wasserdampfdurchlässigkeit gemäß DIN ISO 15106-3 gemessen.

Bei einer, im Vergleich zur Messung der Wasserdampfdurchlässigkeit erniedrigten Temperatur von 23 °C und relativer Luftfeuchtigkeit von 50 % weist die Mehrschichtfolie 11 eine Sauerstoffdurchlässigkeit von 0,10 bis 0,22 cm$^3$/(m$^2\cdot$24h), vorzugsweise 0,13 bis 0,14 cm$^3$/(m$^2\cdot$24h) auf. Die Sauerstoffdurchlässigkeit wird gemäß DIN ISO 15105-2 Annex A ermittelt.

Die erfindungsgemäße Mehrschichtfolie 11 ist gut tiefziehbar und einseitig oder beidseitig siegelbar.

Bevorzugt ist die Mehrschichtfolie 11 farblos transparent, farbig transparent, farbig opak oder weiß opak ausgestaltet.

Die erfindungsgemäße Mehrschichtfolie 11 zeichnet sich zudem dadurch aus, dass sie in erwärmtem Zustand sehr gute Tiefzieheigenschaften hat, welche die Tiefziehbarkeit konventioneller PVC/PCTFE-Verbundfolien bei weitem übertreffen. Aufgrund der guten Tiefzieheigenschaften der erfindungsgemäßen Mehrschichtfolie 11 wird die Wasserdampfbarriere durch den Tiefziehvorgang weniger stark beeinträchtigt. Somit weist die erfindungsgemäße Mehrschichtfolie 11 auch in tiefgezogenem Zustand noch eine überproportional hohe Wasserdampfbarriere ("Blisterbarriere") auf.

Ebenso wie die Wasserdampfbarriere wird auch die hohe Sauerstoffbarriere der erfindungsgemäßen Mehrschichtfolie 11 durch den Tiefziehvorgang weniger stark beeinträchtigt. Folglich können aus der erfindungsgemäßen Mehrschichtfolie 11 mittels Thermoformung Blisterverpackungen mit bislang nicht erzielbarer Barrierewirkung gegenüber Wasserdampf und Sauerstoff hergestellt werden.

Die erfindungsgemäße Mehrschichtfolie zeichnet sich insbesondere dadurch aus, daß auch nach dem Tiefziehvorgang der Kehrwert der Wasserdampfdurchlässigkeit der Mehrschichtfolie um mindestens 10 %, vorzugsweise um mindestens 15 %, und insbesondere um mindestens 20 % größer ist als die Summe der Kehrwerte der Wasserdampfdurchlässigkeiten der einzelnen Schichten.

Die Dicke bzw. das Flächengewicht der in der erfindungsgemäßen Mehrschichtfolie 11 optional vorhandenen Primer- und Kleberschichten hat nur einen geringen Anteil an der Gesamtdicke bzw. des Flächengewichtes der Mehrschichtfolie 11, so dass die Barrierewirkung der Primer- und Kleberschicht vernachlässigbar ist.

Im Rahmen der Erfindung wird eine Blisterverpackung mit einem Blisterbodenteil aus einer Mehrschichtfolie 11 mit einem oder mehreren der voranstehend angeführten Merkmale bereitgestellt.

Weitere vorteilhafte Ausführungsformen der erfindungsgemäßen Blisterverpackung zeichnen sich dadurch aus, dass:

- das Blisterbodenteil mit einer Folie verschlossen ist, die gegen das Blisterbodenteil gesiegelt ist;

- die gegen das Blisterbodenteil gesiegelte Folie aus Aluminium besteht und vorzugsweise 5 bis 80 $\mu$m dick ist;

- die gegen das Blisterbodenteil gesiegelte Folie aus Kunststoff besteht;

- die gegen das Blisterbodenteil gesiegelte Folie eine 5 bis 40 $\mu$m dicke Aluminiumfolie ist, die auf der gegen das Blisterbodenteil gesiegelten Seite mit einem Kunststoff beschichtet oder mit einer Kunststofffolie kaschiert ist.

**Beispiele**

**Herstellung von Mehrschichtfolien**

Auf einer Inline-Anlage mit mehreren Beschichtungs- bzw. Kaschierstationen wurden vier Mehrschichtfolien mit der Materialzusammensetzung PVC/PVDC/PCTFE/PVC gemäß den nachfolgend angegebenen Verfahrensschritten (i) - (iv) hergestellt:

(i) Beschichten einer ersten PVC-Folie mit Haftvermittler (Primer) zur Vorbereitung für den Auftrag von PVDC-Dispersion;
(ii) mehrfaches Beschichten mit PVDC-Dispersion bis zu einer kumulativen Flächendichte von 125 bis 160 g/m$^2$ (Trockenauftragsmasse);
(iii) Aufkaschieren einer PCTFE-Folie auf die PVDC-Schicht unter Verwendung eines ersten Trockenkaschierklebers; und
(iv) Aufkaschieren einer zweiten PVC-Folie auf die PCTFE-Folie unter Verwendung eines zweiten Trockenkaschierklebers.

**Messung der Wasserdampfdurchlässigkeit**

a) Messung der Wasserdampfdurchlässigkeit $WDD_{rj}$ von einschichtigen Referenzfolien aus PVC (127 $\mu$m dick), aus PCTFE (102 $\mu$m dick) und PVDC (75 bzw. 95 $\mu$m dick) gemäß DIN ISO 15106-3.
b) Messung der Wasserdampfdurchlässigkeit $WDD_{Mg}$ der Mehrschichtfolie gemäß DIN ISO 15106-3.
c) Bestimmung der Dicke $d_j$ der in der Mehrschichtfolie enthaltenen Polymerschicht durch Vermessung von mikroskopischen Querschnittaufnahmen der Mehrschichtfolie.
d) Berechnung der Wasserdampfdurchlässigkeit $WDD_j$ der in der Mehrschichtfolie enthaltenen Polymerschichten gemäß der Gleichung:

$$WDD_j = WDD_{rj} \cdot d_{rj} / d_j,$$

wobei $d_{rj}$ die Dicke der einschichtigen Referenzfolie aus Schritt a) und $d_j$ die in Schritt c) ermittelte Dicke der in der Mehrschichtfolie enthaltenen Polymerschicht bezeichnet.
e) Berechnung der Wasserdampfdurchlässigkeit $WDD_{Mb}$ der Mehrschichtfolie in Analogie zu in Reihe geschalteten Widerständen, d.h. als Summe der Kehrwerte der Wasserdampfdurchlässigkeiten $WDD_j$ gemäß der Formel:

$$\frac{1}{WDD_{Mb}} = \sum_{j=1}^{4} \frac{1}{WDD_j} \; .$$

Die gemessenen und berechneten Werte für die Wasserdampfdurchlässigkeit der erfindungsgemäß hergestellten Mehrschichtfolien sind in Tabelle 1 gegenübergestellt.

**Tabelle 1**

| # | PVC μm | PVDC g/m² | PCTFE μm | PVC μm | WDD$_{Mg}$ gemessen g/(m²·24h) | WDD$_{Mb}$ berechnet g/(m²·24h) | $\Delta$WDD = (WDD$_{Mb}$ - WDD$_{Mg}$) / WDD$_{Mb}$ % |
|---|---|---|---|---|---|---|---|
| 1 | 127 | 125,2 | 102,4 | 127 | 0,0333 | 0,0368 | 9,5 |
| 2 | 127 | 125,4 | 104,2 | 127 | 0,0279 | 0,0363 | 23,1 |
| 3 | 127 | 160,7 | 99,5 | 127 | 0,0315 | 0,0344 | 8,4 |
| 4 | 127 | 160,2 | 101,0 | 127 | 0,0279 | 0,0341 | 18,2 |

Es zeigt sich überraschenderweise, dass die an den erfindungsgemäßen Mehrschichtfolien gemessenen Wasserdampfdurchlässigkeiten um mindestens 8,4 % kleiner sind als die aufgrund der kombinierten Wirkung der einzelnen Polymerschichten, d.h. die durch Summenbildung der Kehrwerte der Wasserdampfdurchlässigkeiten zu erwartenden Werte.

**Patentansprüche**

1. Mehrschichtfolie (11) mit mindestens vier Schichten, umfassend

 - eine erste Schicht (1) und eine vierte Schicht (4) mit einer Dicke von 10 bis 400 μm aus einem Polymer ausgewählt aus der Gruppe umfassend Polyvinylchlorid, Copolymere aus Vinylchlorid-Einheiten und einem oder mehreren anderen Monomeren (VC-Copolymere), Gemische aus Polyvinylchlorid und VC-Copolymeren, Polyethylenterephthalat (PET), Polyacrylnitril (PAN), Copolymere aus Acrylnitril-Einheiten und einem oder mehreren anderen Monomeren (AN-Copolymere);
 - eine zweite Schicht (2) mit einer Dicke von 9 bis 120 μm aus einem Vinylidenchlorid-Polymer (PVDC) ausgewählt aus der Gruppe umfassend Polyvinylidenchlorid, Copolymere aus Vinylidenchlorid-Einheiten und einem oder mehreren anderen Monomeren (VDC-Copolymere), Gemische aus Polyvinylidenchlorid und VDC-Copolymeren; und
 - eine dritte Schicht (3) mit einer Dicke von 15 bis 210 μm aus einem Chlortrifluorethylen-Polymer (PCTFE) ausgewählt aus der Gruppe umfassend Polychlortrifluorethylen, Copolymere aus Chlortrifluorethylen-Einheiten und einem oder mehreren anderen Monomeren (CTFE-Copolymere), Gemische aus Polychlortrifluorethylen und CTFE-Copolymeren.

2. Mehrschichtfolie (11) nach Anspruch 1, **dadurch gekennzeichnet, dass** sie eine oder mehrere Kleberschichten (6, 7) und eine oder mehrere Primerschichten (5) umfasst, wobei die Kleberschicht (6, 7) und/oder die Primerschicht (5) zwischen je zwei der Schichten (1, 2, 3, 4) angeordnet sind.

3. Mehrschichtfolie (11) nach Anspruch 1, **dadurch gekennzeichnet, dass** jede der Schichten (1, 4) bis zu 15 Gew.-% und jede der Schichten (2, 3) bis zu 5 Gew.-% an Additiven, bezogen auf das Gesamtgewicht der jeweiligen Schicht, umfasst.

4. Mehrschichtfolie (11) nach Anspruch 1, **dadurch gekennzeichnet, dass** die Dicke der zweiten Schicht (2) 70 bis 110 μm und ihr Flächengewicht 120 bis 180 g/m² beträgt.

5. Mehrschichtfolie (11) nach einem oder mehreren der Ansprüche 1 bis 4, **dadurch gekennzeichnet, dass** sie einseitig oder beidseitig siegelbar ist und/oder farblos transparent, farbig transparent, farbig opak oder weiß opak ausgestaltet ist.

6. Mehrschichtfolie (11) nach Anspruch 2, **dadurch gekennzeichnet, dass** die Primerschicht (5) ein Flächengewicht von 0,5 bis 20 g/m² hat und die Kleberschicht (6, 7) ein Flächengewicht von 1 bis 30 g/m² aufweist.

7. Mehrschichtfolie (11) nach einem oder mehreren der Ansprüche 1 bis 6, **dadurch gekennzeichnet, dass** sie einen Schichtaufbau PVC/PVDC/PCTFE/PVC sowie äquivalente Schichtaufbauten, bei denen die erste und vierte Schicht anstelle von PVC ein Polyester, Polyacrylnitril (PAN) oder AN-Copolymer beinhalten, besitzt.

8. Blisterverpackung, **dadurch gekennzeichnet, dass** sie ein Blisterbodenteil aus einer Mehrschichtfolie gemäß den Ansprüchen 1 bis 7 umfasst.

9. Blisterverpackung nach Anspruch 8, **dadurch gekennzeichnet, dass** das Blisterbodenteil mit einer Folie verschlossen ist, die gegen das Blisterbodenteil gesiegelt ist, wobei die Folie vorzugsweise

aus Aluminium, insbesondere aus Aluminium mit einer Dicke von 5 bis 80 $\mu$m; oder aus Kunststoff besteht; oder eine 5 bis 40 $\mu$m dicke Aluminiumfolie ist, die auf der gegen das Blisterbodenteil gesiegelten Seite mit einem Kunststoff beschichtet oder mit einer Kunststofffolie kaschiert ist.

**Claims**

1. Multilayer foil (11) having at least four layers, encompassing

   - a first layer (1) and a fourth layer (4) having a thickness of from 10 to 440 $\mu$m made of a polymer selected from the group consisting of polyvinyl chloride, copolymers made of vinyl chloride units and of one or more other monomers (VC copolymers); mixtures made of polyvinyl chloride and of VC copolymers, polyethylene terephthalate (PET), polyacrylonitrile (PAN), copolymers made of acrylonitrile units and of one or more other monomers (AN copolymers);
   - a second layer (2) having a thickness of from 9 to 120 $\mu$m made of a vinylidene chloride polymer (PVDC) selected from the group consisting of polyvinylidene chloride, copolymers made of vinylidene chloride units and of one or more other monomers (VDC copolymers), mixtures made of polyvinylidene chloride and of VDC copolymers; and
   - a third layer (3) having a thickness of from 15 to 210 $\mu$m made of a chlorotrifluoroethylene polymer (PCTFE) selected from the group consisting of polychlorotrifluoroethylene, copolymers made of chlorotrifluoroethylene units and of one or more other monomers (CTFE copolymers), mixtures made of polychlorotrifluoroethylene and of CTFE copolymers.

2. Multilayer foil (11) according to Claim 1, **characterized in that** it encompasses one or more adhesive layers (6, 7), and one or more primer layers (5), where the adhesive layer (6, 7) and/or the primer layer (5) has/have been arranged between respectively two of the layers (1, 2, 3, 4).

3. Multilayer foil (11) according to Claim 1, **characterized in that** each of the layers (1, 4) encompasses up to 15 % by weight of additives, and each of the layers (2, 3) encompasses up to 5 % by weight of additives, based on the total weight of the respective layer.

4. Multilayer foil (11) according to Claim 1, **characterized in that** the thickness of the second layer (2) is from 70 to 110 $\mu$m and the weight per unit area thereof is from 120 to 180 g/m$^2$.

5. Multilayer foil (11) according to one or more of Claims 1 to 4, **characterized in that** it is monolaterally or bilaterally sealable and/or is colorless and transparent, colored and transparent, colored and opaque, or white and opaque.

6. Multilayer foil (11) according to Claim 2, **characterized in that** the primer layer (5) has a weight per unit area of from 0.5 to 20 g/m$^2$ and the adhesive layer (6, 7) has a weight per unit area of from 1 to 30 g/m$^2$.

7. Multilayer foil (11) according to one or more of Claims 1 to 6, **characterized in that** it has layer structure and also equivalent layer structures in which the first and fourth layer include, instead of PVC, a polyester, polyacrylonitrile (PAN), or AN copolymer.

8. Blister pack, **characterized in that** it comprises a blister base component of a multilayer foil according to Claims 1 to 7.

9. Blister pack according to Claim 8, **characterized in that** the blister base component has been sealed by a foil which has been sealed against the blister base component, wherein the foil preferably is composed of aluminum, in particular of aluminium having a thickness of from 5 to 80 $\mu$m; or of plastic; or is an aluminum foil with a thickness of from 5 to 40 $\mu$m, which, on the side sealed against the blister base component, has been coated with a plastic, or has been laminated with a plastics foil.

**Revendications**

1. Feuille multicouche (11) avec au moins quatre couches, comprenant :

   - une première couche (1) et une quatrième couche (4) ayant une épaisseur de 10 à 400 $\mu$m en un polymère choisi dans le groupe comprenant le polychlorure de vinyle, des copolymères composés d'unités de chlorure de vinyle et d'un ou plusieurs autres monomères (copolymères VC), des mélanges composés de polychlorure de vinyle et de copolymères VC, le téréphtalate de polyéthylène (PET), le polyacrylonitrile (PAN), des copolymères composés d'unités de nitrile acrylique et d'un ou plusieurs autres monomères (copolymères AN) ;
   - une deuxième couche (2) ayant une épaisseur de 9 à 120 $\mu$m en un polymère de chlorure de vinylidène (PVDC) choisi dans le groupe comprenant le chlorure de polyvinylidène, des copolymères composés d'unités de chlorure de vinylidène et d'un ou plusieurs autres monomères (copolymères VDC), des mélanges composés de chlorure de vinylidène et de copolymères VDC ; et
   - une troisième couche (3) ayant une épaisseur de 15 à 210 $\mu$m en un polymère de chlorotrifluoroéthylène (PCTFE) choisi dans le groupe comprenant le polychlorotrifluoroéthylène, des copolymères composés d'unités de chlorotrifluoroéthylène et d'un ou plusieurs autres monomères (copolymères CTFE), des mélanges composés de polychlorotrifluoroéthylène et de copolymères CTFE.

2. Feuille multicouche (11) selon la revendication 1, **caractérisée en ce qu'**elle comprend une ou plusieurs couches adhésives (6, 7) et une ou plusieurs couches de fond (5), la couche adhésive (6, 7) et/ou la couche de fond (5) étant agencées à chaque fois entre deux des couches (1, 2, 3, 4).

3. Feuille multicouche (11) selon la revendication 1, **caractérisée en ce que** chacune des couches (1, 4) comprend jusqu'à 15 % en poids d'additifs et chacune des couches (2, 3) comprend jusqu'à 5 % en poids d'additifs, pourcentages donnés par rapport au poids total de la couche respective.

4. Feuille multicouche (11) selon la revendication 1, **caractérisée en ce que** l'épaisseur de la deuxième couche (2) se situe entre 70 et 110 $\mu$m et son poids surfacique se situe entre 120 et 180 g/m$^2$.

5. Feuille multicouche (11) selon une ou plusieurs des revendications 1 à 4, **caractérisée en ce qu'**elle peut être scellée d'un côté ou des deux côtés et/ou elle est conçue incolore et transparente, colorée et transparente, colorée et opaque ou blanche et opaque.

6. Feuille multicouche (11) selon la revendication 2, **caractérisée en ce que** la couche de fond (5) a un poids surfacique compris entre 0,5 et 20 g/m$^2$ et la couche adhésive (6, 7) a un poids surfacique compris entre 1 et 30 g/m$^2$.

7. Feuille multicouche (11) selon une ou plusieurs des revendications 1 à 6, **caractérisée en ce qu'**elle a une structure en couches PVC/PVDC/PCTFE/PVC ainsi que des structures en couches équivalentes dans lesquelles la première et la quatrième couche contiennent, à la place du PVC, un polyester, du polyacrylonitrile (PAN) ou des copolymères AN.

8. Emballage thermoformé, **caractérisé en ce qu'**il comprend un fond thermoformé en une feuille multicouche selon l'une quelconque des revendications 1 à 7.

9. Emballage thermoformé selon la revendication 8, **caractérisé en ce que** le fond thermoformé est fermé avec une feuille qui est scellée contre le fond thermoformé,
   dans lequel la feuille de préférence

   - est en aluminium, en particulier en aluminium ayant une épaisseur de 5 à 80 $\mu$m ; ou
   - est en plastique, ou
   - est une feuille d'aluminium d'une épaisseur comprise entre 5 et 40 $\mu$m qui est revêtue d'un plastique sur le côté scellé contre le fond thermoformé ou qui est contrecollée avec une feuille de plastique.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1655237 A1
- EP 1468817 A1
- DE 60209812 T2
- WO 2008014862 A1
- WO 2008033404 A2
- US 20070284280 A1
- US 20050139505 A1